# FASCICULE DE BREVET EUROPEEN

(11) **EP 1 134 123 B1**
(45) Date de publication et mention de la délivrance du brevet: **04.08.2004**
(21) Numéro de dépôt: 01400654.8
(22) Date de dépôt: 13.03.2001
(51) Int. Cl.: B60R 9/06

(54) **Dispositif de transport de charge extérieur pour véhicule automobile**
Äussere Lastenträger für Kraftfahrzeug
Vehicle exterior load carrier

(30) Priorité: 15.03.2000 FR 0003316
(43) Date de publication de la demande: 19.09.2001
(73) Titulaire: Peugeot Citroen Automobiles SA, 92200 Neuilly sur Seine (FR)
(72) Inventeur: Coppi, Christophe, 25600 Vieux-Charmont (FR)
(74) Mandataire: Bentz, Jean-Paul

(56) Documents cités:
- EP-A- 0 812 729
- GB-A- 2 073 686
- US-A- 4 274 568

## Description

L'invention concerne, de façon générale, un dispositif de transport de charge pour véhicule automobile, du type de ceux qui permettent de transporter une charge à l'extérieur du véhicule.

Plus précisément, l'invention concerne, de façon générale, un dispositif de transport de charge pour véhicule automobile, comprenant un volet de coffre arrière et un porte-charge installé sur le volet de coffre, le volet de coffre comprenant au moins une première articulation et au moins une première serrure, comme décrit dans le document US274568.

Certains véhicules automobiles du type cabriolet sont équipés d'un toit rigide, que l'homme de l'art désigne le plus souvent sous l'appellation anglo-saxonne de "hard top", et qui peut être plié et escamoté dans le coffre arrière.

Le volet de coffre arrière d'un tel véhicule comporte généralement deux axes d'articulation, transversaux par rapport au véhicule et disposés sur deux bords opposés du coffre.

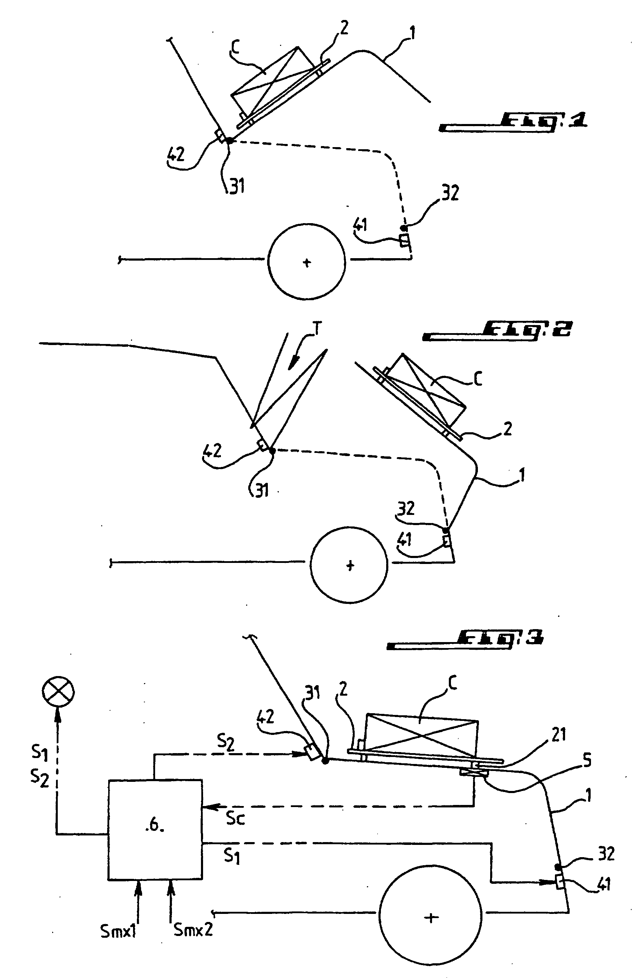

Un premier de ces axes (figure 1), situé sur le bord avant du volet, permet une ouverture classique du volet pour une utilisation traditionnelle du coffre comme volume de rangement.

Le second axe d'articulation (figure 2), situé sur le bord arrière du volet, permet d'ouvrir le coffre par l'avant, pour y ranger le toit T replié.

Lorsque le toit est ainsi escamoté dans le coffre, il occupe une part importante du volume de rangement offert par ce dernier.

Cet inconvénient est généralement contourné par l'installation, sur le volet du coffre arrière, d'un porte-charge externe, destiné à supporter et à maintenir des charges, telles que des bagages, qui ne peuvent être rangées dans le coffre par manque de place.

Dans la mesure où cet accessoire est généralement installé sur le véhicule après la commercialisation de ce dernier et selon le souhait de l'utilisateur, rien n'assure a priori que le porte-charge installé sera conçu de façon telle, et utilise dans des conditions telles, que les spécifications initialement prévues par le constructeur automobile pour garantir l'intégrité des charnières permettant l'articulation du volet de coffre seront respectées.

Dans ce contexte, l'invention, dont le mérite premier est d'avoir mis en évidence le risque que le porte-charge reçoive ainsi des charges excessives au point que l'actionnement du volet du coffre, sans déchargement préalable du porte charge, puisse endommager les charnières de l'articulation de ce volet, a pour but d'éliminer ce risque ou de le réduire à tout le moins.

Il est connu du brevet EP0812729, qui montre les charactéristiques du préambule de la revendication 1, un porte-charge incluant un capteur relié à une alarme sonore ou optique destinée à s'activer en cas de surcharge. En adaptant ce dispositif connu à un volet de coffre l'utilisateur pourrait ouvrir le coffre malgré l'activation de l'alarme, et endommager ainsi la charnière de ce coffre. Le but de l'invention est donc d'améliorer la sécurité de fonctionnement de ce dispositif.

Pour atteindre ce but, l'invention propose un dispositif ayant les caractéristiques qui sont énoncées dans la revendication 1.

L'organe de pesée est par exemple constitué par un capteur de force ou de pression qui délivre, à destination de l'organe de discrimination, un signal de sortie représentatif de la charge présente sur le porte-charge.

L'organe de discrimination peut lui-même comprendre un circuit électronique propre à comparer le signal de sortie du capteur à un seuil prédéterminé représentatif de la charge maximale autorisée, et à délivrer un signal de fin de test représentatif du résultat de la comparaison.

Il est alors avantageux de prévoir que la première serrure soit reliée au circuit électronique et commandée électriquement par le signal de fin de test.

Un témoin visuel peut en outre être relié au circuit électronique, pour produire un signal visible représentatif du signal de fin de test, et informer ainsi l'utilisateur du risque de détérioration de l'articulation, et / ou de la condamnation de la serrure.

Pour obtenir une fiabilité élevée de la mesure, l'organe de pesée est de préférence monté sur un pied au moins du porte-charge.

Si le volet de coffre comprend une seconde serrure et une seconde articulation présentant, vis-à-vis des charges installées sur le porte-charge, une sensibilité différente de celle de la première articulation, le dispositif de l'invention peut être fonctionnellement adapté pour prendre en compte la charge maximale autorisée que peut supporter la seconde articulation.

D'autres caractéristiques et avantages de l'invention ressortiront clairement de la description qui en est faite ci-après, à titre indicatif et nullement limitatif, en référence aux dessins annexés, dans lesquels :
- La figure 1 est une vue schématique partielle d'un véhicule équipé d'un volet de coffre arrière ouvert par pivotement autour d'une première articulation et sur lequel est fixé un porte-charge chargé;
- La figure 2 est une vue schématique partielle du véhicule illustré à la figure 1 et représentant le volet de coffre arrière ouvert par pivotement autour d'une seconde articulation; et
- La figure 3 est une vue schématique partielle d'un véhicule équipé d'un dispositif conforme à l'invention, et représentant le volet de coffre arrière fermé.

Comme le montre la figure 3, l'invention concerne un dispositif de transport de charge pour un véhicule automobile, ce dispositif comprenant essentiellement un volet 1 de coffre arrière et un porte-charge 2 installé sur le volet de coffre.

En pratique, un tel volet de coffre 1 comprend généralement deux articulations, 31 et 32, et deux serrures correspondantes, 41 et 42, pour permettre les deux modes d'ouverture précédemment évoqués et respectivement illustrés aux figures 1 et 2.

Lorsque le volet 1 est basculé autour de l'une ou l'autre de ses articulations 31 ou 32 alors qu'une charge C est installée sur le porte-charge 2, l'articulation sollicitée subit des contraintes susceptibles de l'endommager.

Pour écarter ce risque, l'invention prévoit de fixer une valeur maximale que la charge C ne doit pas dépasser lorsque l'utilisateur souhaite ouvrir le coffre arrière sans délester le porte-charge.

Mais comme d'une part les charnières qui constituent les articulations 31 et 32 ne sont pas nécessairement identiques, et comme d'autre part les contraintes susceptibles d'endommager une articulation dépendent non seulement de la charge C mais également de la position relative de cette charge et de l'articulation concernée, il est utile, au moins dans le cas général, de prévoir que la charge C soit au plus égale à une première charge maximale autorisée Cmx1 si l'utilisateur souhaite faire pivoter le volet 1 autour de la première articulation 31, et soit au plus égale à une seconde charge maximale autorisée Cmx2 si l'utilisateur souhaite faire pivoter le volet 1 autour de la seconde articulation 32.

A cette fin, le dispositif de l'invention comprend un organe de pesée 5 sensible à la charge C installée sur le porte-charge 2, et un organe de discrimination 6, qui est relié à l'organe de pesée 5, et qui adopte au moins deux états différents, selon que la charge C est au plus égale à la charge maximale autorisée Cmx1 et / ou Cmx2, ou que la charge C est supérieure à cette charge maximale autorisée.

L'organe de pesée, qui est avantageusement monté sur un pied 21 du porte-charge 2, peut prendre de multiples formes.

L'organe de pesée peut ainsi, par exemple, être constitué par un ressort précontraint en compression, soumis à la charge C, et calibré de manière à ne pouvoir subir une compression supplémentaire que lorsque la charge C dépasse la charge maximale autorisée Cmx1 et / ou Cmx2.

Il peut néanmoins être utile, pour simplifier la mise en oeuvre de l'invention, de prévoir que l'organe de pesée 5 soit constitué par un capteur de force ou de pression, par exemple réalisé en technologie des semiconducteurs, et propre à délivrer, à destination de l'organe de discrimination 6, un signal de sortie Sc représentatif de la charge C présente sur le porte-charge 2.

De même, l'organe de discrimination est susceptible d'être réalisé de divers manières, et peut viser diverses finalités.

Par exemple, l'organe de discrimination peut être conçu pour informer seulement l'utilisateur du risque qu'il encourt à manipuler le volet de coffre 1 sans avoir au préalable ôté la charge C du porte-charge 2.

Dans ce cas, l'organe de discrimination peut être simplement constitué par un indicateur mécanique déplacé par une extrémité de l'organe de pesée réalisé sous la forme d'un ressort précontraint, cet indicateur adoptant ainsi une position qui dépend de la longueur du ressort, et donc de la charge C.

Cependant, l'organe de discrimination 6 est de préférence conçu pour inhiber l'ouverture de l'une et / ou l'autre des serrures 41 et 42 lorsque la charge C est telle que le pivotement du volet du coffre 1 qui serait permis par l'ouverture de cette serrure risquerait d'endommager l'articulation correspondante, 31 et 32.

Selon un mode de réalisation élémentaire dans lequel l'organe de pesée prendrait la forme d'un ressort précontraint, l'organe de discrimination pourrait ainsi être constitué par un crochet formant une serrure additionnelle montée en parallèle à l'une ou l'autre des serrures 41 et 42 et dont la position serait commandée par le ressort, en fonction de la longueur de ce dernier.

Dans le mode de réalisation préféré de l'invention, dans lequel l'organe de pesée est un capteur délivrant un signal numérique ou analogique Sc représentatif de la charge C, l'organe de discrimination 6 est essentiellement constitué par un circuit électronique propre à comparer le signal de sortie Sc du capteur au moins à un seuil prédéterminé Smx1 représentatif de la première charge maximale autorisée Cmx1, et à délivrer un signal de fin de test S1 représentatif du résultat de la comparaison.

Si la première serrure 41 est une serrure du type à commande électrique, il suffit de la relier au circuit électronique 6 pour qu'elle puisse être commandée électriquement par le signal de fin de test S1, la serrure 41 n'autorisant alors le pivotement du volet 1 autour de l'articulation 31 que si la charge C ne dépasse pas la charge maximale autorisée Cmx1.

De même, le circuit électronique 6 peut comparer le signal de sortie Sc du capteur à un seuil prédéterminé Smx2 représentatif de la deuxième charge maximale autorisée Cmx2, et délivrer un signal de fin de test S2 représentatif du résultat de cette seconde comparaison.

Si la seconde serrure 42 est elle-même une serrure du type à commande électrique, il suffit de la relier au circuit électronique 6 pour qu'elle puisse être commandée électriquement par le signal de fin de test S2, la serrure 42 n'autorisant alors le pivotement du volet 1 autour de l'articulation 32 que si la charge C ne dépasse pas la charge maximale autorisée Cmx2.

Comme le montre la figure 3, l'organe de discrimination peut aussi inclure un témoin visuel 7 relié au circuit électronique 6, pour produire un signal visible, tel qu'un signal lumineux ou un affichage, représentatif du signal de fin de test S1 et / ou du signal de fin de test S2 et permettant à l'utilisateur d'être informé du risque d'ouvrir l'une et / ou l'autre des serrures 41 et 42 sans délestage préalable du porte-charge 2, ou de l'impossibilité de manoeuvrer l'une et / ou l'autre de ces serrures.

## Revendications

1. Dispositif de transport de charge pour véhicule automobile, comprenant un volet (1) de coffre arrière et un porte-charge (2) installé sur le volet de coffre, le volet de coffre (1) comprenant au moins une première articulation (31) et au moins une première serrure (41), un organe de pesée (5) sensible à la charge (C) présente sur le porte-charge (2), et un organe de discrimination (6) relié à l'organe de pesée (5) et adoptant au moins un premier ou un second état selon que cette charge (C) est au plus égale à une charge maximale autorisée (Cmx1) que peut supporter la première articulation (41) ou supérieure à cette charge maximale autorisée (Cmx1), **caractérisé en ce que** l'organe de discrimination (6), dans son second état, inhibe l'ouverture de la première serrure.

2. Dispositif de transporte de charge selon la revendication 1, **caractérisé en ce que** l'organe de pesée (5) est un capteur de force ou de pression qui délivre, à destination de l'organe de discrimination (6), un signal de sortie (Sc) représentatif de la charge (C) présente sur le porte-charge (2).

3. Dispositif de transport de charge suivant la revendication 2, **caractérisé en ce que** l'organe de discrimination (6) comprend un circuit électronique propre à comparer le signal de sorte (Sc) du capteur à un seuil prédéterminé (Smx1) représentatif de la charge maximale autorisée (Cmx1), et à délivrer un signal de fin de test (S1) représentatif du résultat de la comparaison.

4. Dispositif de transport de charge suivant la revendication 4, **caractérisé en ce que** la première serrure (41) est reliée au circuit électronique (6) et commandée électriquement par le signal de fin de test (S1) .

5. Dispositif de transport de charge suivant l'une quelconque des revendications précédentes combinée à la revendication 3, **caractérisé en ce qu'**il comprend un témoin visuel (7) relié au circuit électronique (6) et propre à produire un signal visible représentatif du signal de fin de test (S1).

6. Dispositif de transport de charge suivant l'une quelconque des revendications précédentes, **caractérisé en ce que** l'organe de pesée (5) est monté sur un pied (21) au moins du porte-charge (2).

7. Dispositif de transport de charge suivant l'une quelconque des revendications précédentes, **caractérisé en ce que** le volet de coffre (1) comprend également une seconde articulation (32) et une seconde serrure (42), ce dispositif étant fonctionnellement adapté pour prendre en compte la charge maximale autorisée (Cmx2) que peut supporter la seconde articulation (32).

## Claims

1. Vehicle exterior load carrier consisting of a rear boot rack (1) and a load carrier (2) installed on the boot rack, the boot rack (1) containing at least one first hinged joint (31) and at least one first lock (41), a weighing device (5) sensitive to the load (C) present on the load carrier (2) and a discrimination device (6) connected to the weighing device (5) and adopting at least one first or second state according to whether said load (C) is at most equal to a maximum permitted load (Cmxl) that the first hinged joint (41) can support or is above said maximum permitted load (Cmxl), **characterised in that** the discrimination device (6), in its second state, inhibits the opening of the first lock.

2. Exterior load carrier according to claim 1, **characterised in that** the weighing device (5) is a force or pressure sensor which supplies the discrimination device (6) with an output signal (Sc) representative of the load (C ) present on the load carrier (2).

3. Exterior load carrier according to claim 2, **characterised in that** the discrimination device (6) contains an electronic circuit capable of comparing the output signal (Sc) from the sensor with a predetermined threshold (Smxl) representative of the maximum permitted load (Cmxl) and of supplying an end of test signal (S1) representative of the result of the comparison.

4. Exterior load carrier according to claim 4, **characterised in that** the first lock (41) is connected to the electronic circuit (6) and electrically controlled by the end of test signal (S1).

5. Exterior load carrier according to any of the foregoing claims combined with claim 3, **characterised in that** it contains a visual indicator (7) connected to the electronic circuit (6) and capable of producing a visible signal representative of the end of test signal (S1).

6. Exterior load carrier according to any of the foregoing claims, **characterised in that** the weighing device (5) is mounted on at least one foot (21) of the load carrier (2).

7. Exterior load carrier according to any of the foregoing claims, **characterised in that** the boot rack (1) also contains a second hinged joint (32) and a second lock (42), said carrier being functionally adapted to allow for the maximum permitted load (Cmx2) that the second hinged joint (32) can support.

## Patentansprüche

1. Lasttransportvorrichtung für Kraftfahrzeuge, mit einer hinteren Kofferraumklappe (1) und einem an der Kofferraumklappe angebrachten Lastträger (2), wobei die Kofferraumklappe (1) zumindest ein erstes Gelenk (31) und zumindest ein erstes Schloss (41) enthält, ein gegenüber der am Lastträger (2) vorhandenen Last (C) empfindliches Wägeglied (5) und ein Diskriminierungsglied (6), das mit dem Wägeglied (5) verbunden ist und zumindest einen ersten bzw. einen zweiten Zustand einnimmt, je nachdem, ob diese Last (C) höchstens gleich einer zugelassenen Höchstlast (Cmx1) ist, welche das erste Gelenk (41) tragen kann, oder ob sie höher als diese zugelassene Höchstlast (Cmx1) ist, **dadurch gekennzeichnet, dass** das Diskriminierungsglied (6) in seinem zweiten Zustand das Öffnen des ersten Schlosses unterbindet.

2. Lasttransportvorrichtung nach Anspruch 1, **dadurch gekennzeichnet, dass** das Wägeglied (5) ein Kraft- oder Drucksensor ist, der zum Diskriminierungsglied (6) ein Ausgangssignal (Sc) ausgibt, das repräsentativ ist für die am Lastträger (2) vorhandene Last (C).

3. Lasttransportvorrichtung nach Anspruch 2, **dadurch gekennzeichnet, dass** das Diskriminierungsglied (6) eine elektronische Schaltung enthält, welche das Ausgangssignal (Sc) des Sensors mit einem vorbestimmten Schwellwert (Smx1) vergleichen kann, der repräsentativ ist für die zugelassene Höchstlast (Cmx1), und ein Prüfbeendigungssignal (S1) ausgeben kann, das repräsentativ ist für das Ergebnis des Vergleichs.

4. Lasttransportvorrichtung nach Anspruch 3, **dadurch gekennzeichnet, dass** das erste Schloss (41) mit der elektronischen Schaltung (6) verbunden ist und elektrisch über das Prüfbeendigungssignal (S1) angesteuert wird.

5. Lasttransportvorrichtung nach einem der vorangehenden Ansprüche in Kombination mit Anspruch 3, **dadurch gekennzeichnet, dass** sie eine Sichtanzeige (7) enthält, die mit der elektronischen Schaltung (6) verbunden ist und ein sichtbares Signal erzeugen kann, das repräsentativ ist für das Prüfbeendigungssignal (S1).

6. Lasttransportvorrichtung nach einem der vorangehenden Ansprüche, **dadurch gekennzeichnet, dass** das Wägeglied (5) an einem Fuß (21) des Lastträgers (2) montiert ist.

7. Lasttransportvorrichtung nach einem der vorangehenden Ansprüche, **dadurch gekennzeichnet, dass** die Kofferraumklappe (1) auch ein zweites Gelenk (32) und ein zweites Schloss (42) enthält, wobei diese Vorrichtung funktionsmäßig darauf abgestimmt ist, die zugelassene Höchstlast (Cmx2), die das zweite Gelenk (32) tragen kann, zu berücksichtigen.
